# EUROPÄISCHE PATENTSCHRIFT

(11) **EP 0 545 461 B1**
(45) Veröffentlichungstag und Bekanntmachung des Hinweises auf die Patenterteilung: **09.07.1997**
(21) Anmeldenummer: 92203542.3
(22) Anmeldetag: 18.11.1992
(51) Int. Cl.: H04L 7/027, H03L 7/00

(54) **Einrichtung zur Taktrückgewinnung**
Clock recovery circuit
Dispositif de récupération d'horloge

(30) Priorität: 23.11.1991 DE 4138540
(43) Veröffentlichungstag der Anmeldung: 09.06.1993
(73) Patentinhaber: Philips Patentverwaltung GmbH, 22335 Hamburg (DE); Philips Electronics N.V., 5621 BA Eindhoven (NL)
(72) Erfinder: Frank, Georg, Dr., c/o Philips Patentverwalt. GmbH, W-8500 Nürnberg 10 (DE); Rosenkrank, W., Dr, c/o Philips Patentverwalt.GmbH, W-8500 Nürnberg 10 (DE)
(74) Vertreter: Volmer, Georg, Dipl.-Ing.

(56) Entgegenhaltungen:
- US-A- 4 320 515
- US-A- 5 062 122
- NTZ ARCHIV Bd. 11, Nr. 3, 1. Mai 1989, BERLIN, DE Seiten 99 - 109 W. SAALFRANK 'STORVERHALTEN EINES DELAY-LOCKED LOOP MIT ALLGEMEINEM KORRELATOR'
- MICROPROCESSORS AND MICROSYSTEMS Bd. 12, Nr. 4, 1. Mai 1988, LONDON,GB Seiten 214 - 223 J. ELDON 'APPLICATIONS OF A DIGITAL CORRELATOR'

## Beschreibung

Die Erfindung betrifft eine Einrichtung zur Rückgewinnung eines Taktsignals aus einem Datensignal mit einem mit dem Taktsignal getakteten Datenentscheider zur Gewinnung eines entschiedenen Datensignals aus dem Datensignal und mit einem spannungsgesteuerten Oszillator mit vorgeschaltetem Schleifenfilter zur Gewinnung des Taktsignals aus einem aus dem Datensignal und dem entschiedenen Datensignal ableitbaren Regelsignal.

Die Erfindung betrifft weiter ein Übertragungssystem sowie einen Empfänger mit einer derartigen Einrichtung.

Derartige Einrichtungen werden in Empfängern von digitalen Nachrichtenübertragungssystemen benötigt, um ein übertragenes Datensignal im Empfänger mit einem Taktsignal abzutasten.

Aus US-A-4 423 518 ist eine Einrichtung der eingangs genannten Art bekannt. Dabei wird ein empfangenes Datensignal einer Entscheidungseinrichtung sowie einer Verzögerungs/Subtraktionseinrichtung zugeführt, an deren Ausgang als Differenzsignal die Differenz des Datensignals und eines um eine Bitdauer verzögerten Datensignals liegt. Der Entscheidungseinrichtung wird außerdem als Taktsignal das Ausgangssignal eines spannungsgesteuerten Oszillators mit vorgeschaltetem Schleifenfilter zugeführt. Ein aus der Multiplikation des entschiedenen Datensignals und des Differenzsignals gewonnenes Signal wird dem Schleifenfilter zugeführt.

Der Erfindung liegt die Aufgabe zugrunde, eine Einrichtung der eingangs genannten Art anzugeben, die auf einfache Weise integrierbar ist und die auch für hohe Frequenzen geeignet ist.

Diese Aufgabe wird bei einer Einrichtung der eingangs genannten Art dadurch gelöst, daß zur Gewinnung des Regelsignals eine DLL (Delay-Locked-Loop)-Korrelationseinrichtung vorgesehen ist.

DLL-Korrelationseinrichtungen werden zur Synchronisation von Codefolgen benutzt und sind beispielsweise aus "Spread Spectrum Systems", S. 210 ff von R. C. Dixon, New York 1976 oder aus "Der Delay-Locked-Loop in der Spread-Spectrum-Übertragung: Analyse und Optimierung", ausgewählte Arbeiten über Nachrichtensysteme Nr. 67, H.W. Schüssler, Erlangen 1988 bekannt. Im Gegensatz zu den aus der Codesynchronisation bekannten DLL-Korrelationseinrichtungen wird bei der Einrichtung zur Rückgewinnung des Taktsignals einem ersten Eingang der Korrelationseinrichtung das Datensignal sowie einem zweiten Eingang das Ausgangssignal des Datenentscheiders, d.h. das entschiedene Datensignal zugeführt. Hierdurch erfolgt eine selbsttätige Einstellung des Taktsignals, ohne daß eine Ein- bzw. Nachjustierung notwendig ist. Hierdurch entfällt ein aufwendiger Abgleich bei der Fertigung der Einrichtung. Darüber hinaus ist die Einrichtung bei geringem Aufwand leicht integrierbar.

Eine mit Gattern, insbesondere EX-OR-Gattern zur Korrelation aufwandsgünstig realisierbare Korrelationseinrichtung ist als DLL-Verzögerungskorrelator mit zwei Korrelatoren ausgebildet, in denen jeweils das Datensignal oder das um eine vorgebbare Bitdauer verzögerte Datensignal mit dem entschiedenen Datensignal oder dem um eine vorgebbare Bitdauer verzögerten entschiedenen Datensignal korreliert wird, wobei zur Gewinnung des Regelsignals ein Differenzbildner vorgesehen ist, der aus der Differenz von Signalen am Ausgang der Korrelatoren das Regelsignal bildet. Hierbei wird im Gegensatz zu den aus der Codefolgensynchronisation bekannten DLL-Verzögerungskorrelatoren, bei denen eine Empfangsfolge in zwei Zweigen jeweils mit zeitverschobenen lokal erzeugten gleichen Codefolgen korreliert wird, das Datensignal in zwei Zweigen jeweils direkt oder zeitverschoben mit dem entschiedenen Datensignal direkt oder zeitverschoben korreliert. Die vorgebbare Bitdauer zur Verzögerung kann dabei ein Vielfaches oder auch nur einen Bruchteil der Bitdauer des Datensignals betragen. Durch die Differenzbildung der Ausgangssignale der beiden Korrelatoren erfolgt eine Überlagerung, so daß schließlich das Regelsignal zur Regelung des spannungsgesteuerten Oszillators gewinnbar ist.

Eine verallgemeinerte Form einer DLL-Korrelationseinrichtung ergibt sich, wenn die Korrelationseinrichtung als Filterkorrelator mit einem ersten und zweiten Filter ausgebildet wird, wobei dem ersten Filter das Datensignal und dem zweiten Filter das entschiedene Datensignal zuführbar ist und wobei die Ausgangssignale der Filter miteinander korreliert und dem Schleifenfilter zugeführt werden. Derartige Filterkorrelatoren sind ebenfalls aus der Codesynchronisation beispielsweise aus "Korrelatoren mit analogen Filterpaaren und Synthese geeigneter Codierungssignale für den Delay-Locked-Loop", ausgewählte Arbeiten über Nachrichtensysteme Nr. 42, H.W. Schüssler, Erlangen 1980 bekannt. Hierin sind Bedingungen angegeben, die auf ungerade Regelkennlinien führen. Im Gegensatz zu den hieraus bekannten Filterkorrelatoren, bei denen einem ersten Filter eine Empfangsfolge und einem zweiten Filter eine lokal erzeugte gleiche Codefolge zugeführt wird, wird bei den Korrelationseinrichtungen zur Taktsynchronisation dem ersten Filter das Datensignal und dem zweiten Filter das entschiedene Datensignal zugeführt.

Aus dem Datensignal können auf einfache Weise Rechtecksignale dadurch erzeugt werden, daß das Datensignal der Korrelationseinrichtung über einen Begrenzer zugeführt wird.

Eine auf einfache Weise auch integriert realisierbare Korrelationseinrichtung weist ein erstes und ein zweites EX-OR-Gatter auf, wobei dem ersten EX-OR-Gatter das empfangene Datensignal und das entschiedene Datensignal und dem zweiten EX-OR-Gatter ein um eine Bitdauer verzögertes Datensignal und das empfangene Datensignal zuführbar sind und wobei das Regelsignal aus der Differenz des Ausgangssignals des ersten EX-OR-Gatters und des Ausgangssignals des zweiten EX-OR-Gatters gebildet wird. Bei einer derartigen Korrelationseinrichtung erfolgt eine selbsttätige Einstellung des Taktsignals, ohne daß eine Ein- oder Nachjustierung notwendig ist.

Wird das Ausgangssignal des ersten EX-OR-Gatters um eine halbe Bitdauer verzögert, so wird die bei der Differenzbildung hervorgerufene Störwechselspannung minimiert.

Im folgenden wird die Erfindung anhand der in den Figuren dargestellten Ausführungsbeispiele näher erläutert.

Es zeigen:
Fig. 1a ein Übertragungssystem,
Fig. 1b eine Einrichtung zur Taktrückgewinnung,
Fig. 2 eine Korrelationseinrichtung als Verzögerungskorrelator,
Fig. 3 eine Korrelationseinrichtung als Filterkorrelator,
Fig. 4a ein Ausführungsbeispiel einer Korrelationseinrichtung mit einem Regelbereich von einer Bitdauer und
Fig. 4b Diagramme von Zeitverläufen der Korrelationseinrichtung von Fig. 4a.

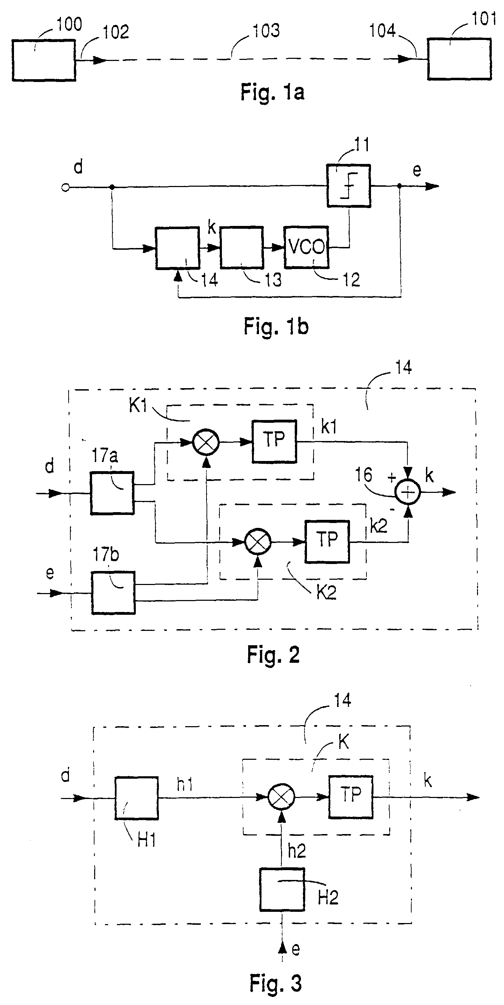

Das in Fig. 1a dargestellte Übertragungssystem besteht aus einem Sender 100, einem Empfänger 101 sowie einem Übertragungskanal 103, durch den der Sender 100 und der Empfänger 101 miteinander gekoppelt sind. Am Ausgang des Senders 100 liegt ein zu sendendes Datensignal 102, das über den Übertragungskanal 103 dem Sender 101 zugeführt wird, so daß am Eingang des Senders 101 ein empfangenes Datensignal 104 anliegt.

Der in Fig. 1a dargestellte Empfänger 101 weist eine Einrichtung zur Rückgewinnung eines Taktsignals aus dem Datensignal 104 auf, deren Funktion im Zusammenhang mit den folgenden Figuren ausführlich erläutert wird. Dabei wird für das in Fig. 1a mit dem Bezugszeichen 104 bezeichnete empfangene Datensignal das Bezugszeichen d verwendet.

Fig. 1b zeigt die prinzipielle Anordnung einer Einrichtung zur Taktrückgewinnung, die auf einem korrelativen Verfahren basiert. Dabei wird ein Datensignal d sowohl einer Korrelationseinrichtung 14 sowie einem Datenentscheider 11 zugeführt. Am Ausgang des Entscheiders 11 liegt ein entschiedenes Datensignal e, das ebenfalls der Korrelationseinrichtung 14 zugeführt wird. Am Ausgang der Korrelationseinrichtung 14 liegt ein Korrelationssignal k, das über ein Schleifenfilter 13 einen nachgeschalteten spannungsgesteuerten Oszillator 12 steuert. Der spannungsgesteuerte Oszillator liefert ein Taktsignal t für den Datenentscheider 11.

In der Korrelationseinrichtung 14 erfolgt eine Korrelation des empfangenen Datensignals mit dem entschiedenen Datensignal e. Das Korrelationssignal k dient so als Fehlersignal für die Nachstimmung des spannungsgesteuerten Oszillators. Bei der in Fig. 1b dargestellten Einrichtung zur Taktrückgewinnung wird somit das Empfangsdatensignal d mit dem empfangenen Datensignal e, d.h. mit einem Schätzwert desselben Datensignals korreliert. Eine derartige Einrichtung zur Taktrückgewinnung besitzt selbstjustierende Eigenschaften, da das regenerierte Taktsignal direkt aus dem Takt des Datensignals d abgeleitet wird. Hierdurch wird die Abtastphase im Datenentscheider 11 automatisch nachgeführt, so daß aufwendige Ein- und Nachjustierungen der Einrichtung entfallen.

Fig. 2 zeigt die prinzipielle Darstellung einer Korrelationseinrichtung 14, die für eine Einrichtung zur Taktrückgewinnung entsprechend dem in Fig. 1 dargestellten Ausführungsbeispiel einsetzbar ist. Der Korrelationseinrichtung 14 wird ein empfangenes Datensignal d sowie ein entschiedenes Datensignal e zugeführt. Am Ausgang der Korrelationseinrichtung 14 liegt ein Regelsignal k. Das Datensignal d wird nach Durchlaufen einer ersten Verzögerungseinrichtung 17a einem ersten Korrelator K1 sowie einem zweiten Korrelator K2 zugeführt. Das entschiedene Datensignal e wird ebenfalls zunächst einer zweiten Verzögerungseinrichtung 17b zugeführt. Die Ausgangssignale der Verzögerungseinrichtungen 17a, 17b werden an die Korrelatoren K1, K2 weitergeleitet. Die Korrelatoren K1, K2 bestehen jeweils aus einem Multiplizierer und einem nachgeschalteten Tiefpaß. Am Ausgang der Korrelatoren K1, K2 liegen Signale k1, k2, die einem Differenzbildner 16 zugeführt werden. Am Ausgang des Differenzbildners 16 liegt als Ausgangssignal k der Korrelationseinrichtung 14 als Differenzsignal das Regelsignal k.

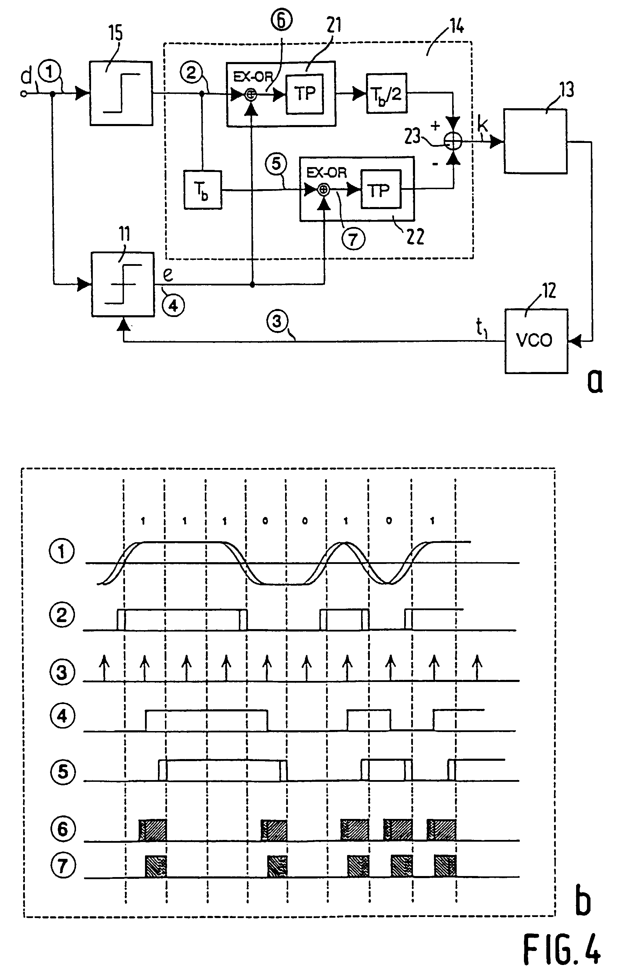

Die in Fig. 2 dargestellte Korrelationseinrichtung ist als DLL-Verzögerungskorrelator ausgebildet. Dabei wird das empfangene Datensignal d in zwei Zweigen in den Korrelatoren K1, K2 jeweils direkt oder zeitverschoben mit dem entschiedenen Datensignal e direkt oder zeitverschoben korreliert. Durch die Differenzbildung der Ausgangssignale k1, k2 der beiden Korrelatoren K1, K2 erfolgt eine Überlagerung, so daß schließlich ein Regelsignal k zur Regelung des spannungsgesteuerten Oszillators gewinnbar ist. Derartige Verzögerungskorrelatoren sind mit Gattern, insbesondere EX-OR-Gattern mit geringem Aufwand realisierbar, wie dies in Fig. 4a gezeigt ist.

Fig. 3 zeigt ein weiteres Ausführungsbeispiel einer Korrelationseinrichtung 14. Die Korrelationseinrichtung 14 ist als Filterkorrelator mit einem ersten Filter H1 und einem zweiten Filter H2 ausgebildet. Dem ersten Filter H1 wird das Datensignal d zugeführt, dem zweiten Filter H2 das entschiedene Datensignal e. Am Ausgang des ersten H1 und des zweiten H2 Filters liegt jeweils ein entsprechend gefiltertes Datensignal h1 bzw. entschiedenes Datensignal h2. Vorschriften für diese Filter sind "Korrelatoren mit analogen Filterpaaren und Synthese geeigneter Codierungssignale für den Delay-Locked-Loop", ausgewählte Arbeiten über Nachrichtensysteme Nr. 42, H.W. Schüssler, Erlangen 1980 entnehmbar. Die gefilterten Signale h1, h2 werden mittels eines Multiplizierers und einer anschließenden Tiefpaßfilterung miteinander korreliert. Am Ausgang des Tiefpasses liegt das Regelsignal k, das dem in Fig. 1 dargestellten Schleifenfilter zuführbar ist.

Fig. 4a zeigt ein Ausführungsbeispiel einer Einrichtung zur Taktrückgewinnung. Dabei werden die bereits im Zusammenhang mit Fig. 1b eingeführten Bezugszeichen verwendet. Bei der in Fig. 4a dargestellten Einrichtung zur Taktrückgewinnung wird ein empfangenes Datensignal d einerseits über einen Begrenzer 15 einer Korrelationseinrichtung 14 und andererseits einem Datenentscheider 11 zugeführt. Am Ausgang der Korrelationseinrichtung 14 liegt ein Regelsignal k, das über ein Schleifenfilter 13 einen spannungsgesteuerten Oszillator 12 steuert. Das Ausgangssignal des spannungsgesteuerten Oszillators bildet das Taktsignal t zur Taktung des Datenentscheiders 11. Am Ausgang des Datenentscheiders 11 liegt ein entschiedenes Datensignal e, welches der Korrelationseinrichtung 14 zugeführt wird. Die Korrelationseinrichtung 14 besteht aus einem ersten Korrelator 21 mit einem EX-OR-Gatter und einem nachgeschalteten Tiefpaß. Dem EX-OR-Gatter wird das begrenzte Datensignal sowie das entschiedene Datensignal e zugeführt. Die Korrelationseinrichtung 14 weist weiter einen zweiten Korrelator 22 mit einem weiteren EX-OR-Gatter und einem nachgeschalteten Tiefpaß auf. Dem EX-OR-Gatter des zweiten Korrelators 22 wird das um eine Bitdauer Tb verzögerte und begrenzte Datensignal d sowie das entschiedene Datensignal e zugeführt. Das Ausgangssignal des ersten Korrelators 21 wird um eine halbe Bitdauer verzögert und durch Differenzbildung mit dem Ausgangssignal des zweiten Korrelators 22 verknüpft. Die Verzögerung um eine halbe Bitdauer T_{b}/2 kann bei einer Ausgestaltungsform auch direkt zwischen dem EX-OR-Gatter und dem Tiefpaß des ersten Korrelators 21 vorgesehen werden. In Fig. 4b ist in Spur 6 der Signalverlauf für diese Ausgestaltungsform dargestellt.

Die Funktionsweise der in Fig. 4a dargestellten Einrichtung zur Taktrückgewinnung wird im Zusammenhang mit den in Fig. 4b dargestellten Signalverläufen näher erläutert.

Fig. 4b zeigt Signalverläufe der in Fig. 4a dargestellten Einrichtung zur Taktrückgewinnung. Dabei korrespondieren die in Fig. 4a jeweils mit einem Kreis umrandeten Bezugszeichen mit den in Fig. 4b verwendeten Bezugszeichen zur Kennzeichnung der Signalverläufe in ebenfalls mit einem Kreis umrandeten Spuren 1 bis 7. In der Spur 1 der in Fig. 4b dargestellten Signalverläufe ist ein beispielhafter zeitlicher Verlauf des Datensignals d ergänzt mit den entsprechenden zuordenbaren logischen Werten 1 oder 0 dargestellt. In Spur 2 ist das Ausgangssignal des in Fig. 4a gezeigten Begrenzers dargestellt. Spur 3 zeigt das Ausgangssignal des spannungsgesteuerten Oszillators 12, d.h. das aus Impulsen gebildete Taktsignal t, das die Abtastzeitpunkte des Datenentscheiders markiert. In Spur 4 ist das entschiedene Datensignal e am Ausgang des Datenentscheiders 11 gezeigt, das sich aus dem empfangenen Datensignal d (Spur 1) durch Abtastung mit dem in Spur 3 dargestellten Takt- bzw. Abtastsignal t ergibt. Spur 5 zeigt das um eine Bitdauer Tb verzögerte und begrenzte Datensignal. In Spur 6 ist das um eine halbe Bitdauer verzögerte Ausgangssignal des ersten Korrelators 21 dargestellt, das aus dem begrenzten Datensignal (Spur 2) und dem empfangenen Datensignal e (Spur 4) durch EX-OR-Verknüfung gewonnen wird. Dabei ist schraffiert die Zeitfläche dargestellt, die in der Tiefpaßfilterung ermittelt wird, und gekreuzt schraffiert ist die Zeitfläche dargestellt, die sich durch die in Spur 1 dargestellte Phasenschwankung des Datensignals d ergibt. Spur 7 zeigt schließlich das Ausgangssignal des zweiten Korrelators 22, das aus einer EX-OR-Verknüpfung des in Spur 5 dargestellten Signals sowie des empfangenen Datensignals (Spur 4) gebildet wird. Auch bei dem in Spur 7 eingezeichneten Signal ist schraffiert die Zeitfläche dargestellt, die in der Tiefpaßfilterung ermittelt wird, und gekreuzt schraffiert ist die Zeitfläche eingezeichnet, die durch Phasenschwankungen des in Spur 1 dargestellten Datensignals hervorgerufen wird. Durch die Verzögerung um T_{b}/2 nach dem Korrelator 21 wird die bei der Differenzbildung 23 hervorgerufene Störwechselspannung minimiert.

Anhand der in Fig. 4b dargestellten zeitlichen Verläufe ist veranschaulicht, daß mit Hilfe der in Fig. 4a beschriebenen Einrichtung zur Taktgewinnung Phasenfehler des Datensignals bis zu maximal plus/minus eine halbe Bitdauer ausgeglichen werden können, d.h. der Regelbereich entspricht 1T_{b}. Dabei ist wesentlich, daß in beiden dem Differenzbildner 23 zugeführten Signalen der Spur 6 und der Spur 7 eine gegenläufige Änderung des Mittelwertes berücksichtigt wird. Es erfolgt somit eine selbsttätige Einstellung der Abtastphase des Taktsignals t (Spur 3), ohne die Notwendigkeit einer Abtastphasenein- oder Nachjustierung. Der in Fig. 4a dargestellte Verzögerungskorrelator ist auch in integrierter Form auf einfache Weise realisierbar.

## Patentansprüche

1. Einrichtung zur Rückgewinnung eines Taktsignals (t) aus einem Datensignal (d) mit einem mit dem Taktsignal (t) getakteten Datenentscheider (11) zur Gewinnung eines entschiedenen Datensignals (e) aus dem Datensignal (d) und mit einem spannungsgesteuerten Oszillator (12) mit vorgeschaltetem Schleifenfilter (13) zur Gewinnung des Taktsignals (t) aus einem aus dem Datensignal (d) und dem entschiedenen Datensignal (e) ableitbaren Regelsignal (k), dadurch gekennzeichnet, daß zur Gewinnung des Regelsignals (k) eine DLL (Delay-Locked-Loop)-Korrelationseinrichtung (14) vorgesehen ist.

2. Einrichtung nach Anspruch 1,
dadurch gekennzeichnet, daß die Korrelationseinrichtung (14) als DLL-Verzögerungskorrelator mit zwei Korrelatoren (K1, K2) ausgebildet ist, in denen jeweils das Datensignal (d) oder das um eine vorgebbare Bitdauer verzögerte Datensignal mit dem entschiedenen Datensignal (e) oder dem um eine vorgebbare Bitdauer verzögerten entschiedenen Datensignal korreliert wird, wobei zur Gewinnung des Regelsignals (k) ein Differenzbildner (16) vorgesehen ist, der aus der Differenz von Signalen (k1, k2) am Ausgang der Korrelatoren (K1, K2) das Regelsignal (k) bildet.

3. Einrichtung nach Anspruch 1,
dadurch gekennzeichnet, daß die Korrelationseinrichtung (14) als Filterkorrelator mit einem ersten (H1) und einem zweiten (H2) Filter ausgebildet ist, daß dem ersten Filter (H1) das Datensignal (d) und dem zweiten Filter (H2) das entschiedene Datensignal (e) zuführbar ist, wobei zur Gewinnung des Regelsignals (k) ein Korrelator (K) vorgesehen ist, der aus Ausgangssignalen (k1, k2) des ersten (H1) und zweiten (H2) Filters das Regelsignal (k) bildet.

4. Einrichtung nach einem der Ansprüche 1 bis 3,
dadurch gekennzeichnet, daß dem Eingang der Korrelationseinrichtung (14), dem das Datensignal (d) zuführbar ist, ein Begrenzer (15) vorgeschaltet ist.

5. Einrichtung nach einem der Ansprüche 1 bis 4,
dadurch gekennzeichnet, daß die Korrelationseinrichtung (14) ein erstes (21) und ein zweites (22) EX-OR-Gatter aufweist, wobei dem ersten EX-OR-Gatter (21) das empfangene Datensignal (d) und das entschiedene Datensignal (e) und dem zweiten EX-OR-Gatter (22) ein um eine Bitdauer (Tb) verzögertes Datensignal und das empfangene Datensignal (e) zuführbar sind, und wobei das Regelsignal (k) aus der Differenz des Ausgangssignals des ersten EX-OR-Gatters (21) und des zweiten EX-OR-Gatters (22) gebildet wird.

6. Einrichtung nach Anspruch 5,
dadurch gekennzeichnet, daß das Ausgangssignal des ersten EX-OR-Gatters (21) um eine halbe Bitdauer verzögert wird.

7. Übertragungssystem zur Übertragung eines Datensignals (102, 104, d) mit mindestens einem Sender (100) zum Senden des Datensignals (102) und mit mindestens einem Empfänger (101) zum Empfang des Datensignals (104, d), wobei mindestens ein Empfänger (101) eine Einrichtung zur Rückgewinnung eines Taktsignals (t) nach einem der Ansprüche 1 bis 6 aufweist.

8. Empfänger für ein Übertragungssystem zur Übertragung eines Datensignals (d), wobei der Empfänger (101) eine Einrichtung zur Rückgewinnung eines Taktsignals (t) nach einem der Ansprüche 1 bis 6 aufweist.

## Claims

1. A clock recovery circuit for recovering a clock signal (t) from a data signal (d), which circuit includes a data decision circuit (11) timed with the clock signal (t) for producing a decided data signal (e) from the data signal (d) and includes a voltage-controlled oscillator (12) preceded by a loop filter (13) for producing the clock signal (t) from a control signal (k) that can be derived from the data signal (d) and the decided data signal (e), characterized in that for producing the control signal (k) a DLL (Delay-Locked Loop) correlation means (14) is provided.

2. A clock recovery circuit as claimed in Claim 1, characterized in that the correlation means (14) is structured as a DLL delay correlator comprising two correlators (K1, K2), in which correctors the data signal (d) or the data signal delayed by a predeterminable bit period respectively, is correlated with the decided data signal (e) or with the decided data signal delayed by a predeterminable bit period, whilst for forming the control signal (k) a difference former (16) is provided which forms the control signal (k) from the difference between signals (k1, k2) at the output of the correlators (K1, K2).

3. A clock recovery circuit as claimed in Claim 1, characterized in that the correlation means (14) is arranged as a filter correlator comprising a first filter (H1) and a second filter (H2), in that the first filter (H1) can be supplied with the data signal (d) and the second filter (H2) is supplied with the decided data signal (e), a correlator (K) being provided for producing the control signal (k), which correlator forms the control signal (k) from the output signals (k1, k2) of the first filter (H1) and second filter (H2).

4. A clock recovery circuit as claimed in one of the Claims 1 to 3, characterized in that a limiter (15) precedes the input of the correlation means (14) to which input the data signal (d) can be applied.

5. A clock recovery circuit as claimed in one of the Claims 1 to 4, characterized in that the correlation means (14) comprises a first EX-OR gate (21) and a second EX-OR gate (22), in which the first EX-OR gate (21) can be supplied with the received data signal (d) and the decided data signal (e) and the second EX-OR gate (22) can be supplied with a data signal delayed by a bit period (T_{b}) and the received data signal (e) and in which the control signal (k) is formed from the difference between the output signal of the first EX-OR gate (21) and that of the second EX-OR gate (22).

6. A clock recovery circuit as claimed in Claim 5, characterized in that the output signal of the first EX-OR gate 21 is delayed by a half bit period.

7. A communication system for transmitting a data signal (102, 104, d) comprising at least a transmitter (100) for transmitting the data signal (102) and at least a receiver (101) for receiving the data signal (104, d), at least one receiver (101) comprising a clock recovery circuit for recovering a clock signal (t) as claimed in one of the Claims 1 to 6.

8. A receiver for a communication system for transmitting a data signal (d), the receiver (101) comprising a clock recovery circuit for recovering a clock signal (t) as claimed in one of the Claims 1 to 6.

## Revendications

1. Dispositif pour la récupération d'un signal de synchronisation (t) à partir d'un signal de données (d) comportant un circuit de décision de données (11) synchronisé par le signal de synchronisation (t) pour l'obtention d'un signal de données confirmé (e) à partir du signal de données (d) et comportant un oscillateur commandé en tension avec filtre de boucle connecté en amont (13) pour l'obtention du signal de synchronisation (t) à partir d'un signal de commande (k) qui peut être déduit du signal de données et du signal de données confirmé (e), caractérisé en ce qu'un dispositif de corrélation à DLL (DDL) est prévu pour l'obtention du signal de commande (k).

2. Dispositif suivant la revendication 1, caractérisé en ce que le dispositif de corrélation (14) est réalisé sous la forme d'un corrélateur à retard à DLL comprenant deux corrélateurs (K1, K2) dans chacun desquels le signal de données (d) ou le signal de données retardé d'une durée de bit prédéterminable est corrélé avec le signal de données confirmé (e) ou le signal de données confirmé et retardé d'une durée de bit prédéterminable, sachant que pour l'obtention du signal de commande (k) il est prévu un formateur de différence (16) qui forme le signal de commande (k) à partir de la différence des signaux (k1, k2) à la sortie des corrélateurs (K1, K2).

3. Dispositif suivant la revendication 1, caractérisé en ce que le dispositif de corrélation (14) est réalisé sous la forme d'un corrélateur à filtres comprenant un premier filtre (H1) et un deuxième filtre (H2), que le signal de données (d) peut être amené au premier filtre (H1) et le signal de données confirmé (e) peut être amené au deuxième filtre (H2), sachant que pour l'obtention du signal de commande il est prévu un corrélateur (k) qui forme le signal de commande (k) à partir des signaux de sortie (k1, k2) du premier filtre (H1) et du deuxième filtre (H2).

4. Dispositif suivant l'une quelconque des revendications 1 à 3, caractérisé en ce qu'un limiteur (15) est connecté en amont de l'entrée du dispositif de corrélation (14) à laquelle le signal de données (d) peut être amené.

5. Dispositif suivant l'une quelconque des revendications 1 à 4, caractérisé en ce que le dispositif de corrélation (14) comprend une première porte OU exclusif (21) et une deuxième porte OU exclusif (22), le signal de données reçu (d) et le signal de données confirmé (e) pouvant être amenés à la première porte OU exclusif (21) et un signal de données retardé d'une durée de bit (Tb) et le signal de données reçu (e) pouvant être amenés à la deuxième porte OU exclusif (22) et le signal de commande (k) est formé à partir de la différence du signal de sortie de la première porte OU exclusif (21) et du signal de sortie de la deuxième porte OU exclusif (22).

6. Dispositif suivant la revendication 5, caractérisé en ce que le signal de sortie de la première porte OU exclusif (21) est retardé d'une demi-durée de bit.

7. Système de transmission pour la transmission d'un signal de données (102, 104, d) comportant au moins un émetteur (100) pour l'émission du signal de données (102) et au moins un récepteur (101) pour la réception du signal de données (104, d), au moins un récepteur (101) comprenant un dispositif pour la récupération d'un signal de synchronisation (t) suivant l'une quelconque des revendications 1 à 6.

8. Récepteur pour un système de transmission d'un signal de données (d), dans lequel le récepteur (101) comprend un dispositif pour la récupération d'un signal de synchronisation (t) suivant l'une quelconque des revendications 1 à 6.
